# EUROPÄISCHE PATENTSCHRIFT

(11) **EP 1 937 520 B1**
(45) Veröffentlichungstag und Bekanntmachung des Hinweises auf die Patenterteilung: **27.01.2010**
(21) Anmeldenummer: 06806136.5
(22) Anmeldetag: 10.10.2006
(51) Int. Cl.: B60R 22/195, F15B 15/12, F15B 15/19

(54) **STRAFFEINRICHTUNG FÜR SICHERHEITSGURTE MIT EINEM OLIVEFÖRMIGEN KOLBEN**
TENSIONING DEVICE FOR SEATBELTS WITH AN OLIVE-SHAPED PISTON
DISPOSITIF DE TENSION POUR TENDRE DES CEINTURES DE SECURITE, COMPRENANT DES PISTONS AYANT UNE FORME D'OLIVE

(30) Priorität: 18.10.2005 DE 102005049659
(43) Veröffentlichungstag der Anmeldung: 02.07.2008
(73) Patentinhaber: AUTOLIV DEVELOPMENT AB, 447 83 Vargarda (SE)
(72) Erfinder: DÜRRER, Michael, 24536 Neumünster (DE); EHLERS, Jens, 25358 Horst (DE); LEYFFER, Maren, 22880 Wedel (DE)
(74) Vertreter: Müller, Karl-Ernst
(86) Internationale Anmeldenummer: PCT/EP2006/009759
(87) Internationale Veröffentlichungsnummer: WO 2007/045376

(56) Entgegenhaltungen:
- EP-A1- 1 283 138
- DE-B- 1 274 301
- FR-A1- 2 491 647
- FR-A1- 2 494 997
- US-A- 5 908 222

## Beschreibung

Die Erfindung betrifft eine Straffeinrichtung für ein Sicherheitsgurtsystem in Kraftfahrzeugen mit einer aus einem wenigstens einen mit einem Krümmungsradius gebogenen Rohrabschnitt aufweisenden Rohr und aus einem darin beweglich geführten Kolben bestehenden Antriebsvorrichtung, wobei der Kolben über ein Antriebsseil mit dem die Straffbewegung ausführenden Teil des Sicherheitsgurtsystems verbunden und mittels eines pyrotechnischen Antriebes in einer Längsbewegung durch das Rohr bewegbar ist, und wobei der Kolben mit einem Kanal zur Durchführung des in einer auf der in Bewegungsrichtung des Kolbens weisenden Seite des Kolbens gegen den Kolben abgestützten Presshülse gehaltenen Antriebsseils versehen ist.

Eine Straffeinrichtung mit den vorgenannten Merkmalen ist in der FR 2494997 A1 beschrieben. Soweit der Kolben einen Kanal zur Durchführung des Antriebsseils aufweist, besteht das Problem, dass sich insbesondere bei einer Bewegung des Kolbens durch den gebogenen Rohrabschnitt der Kanal aufweitet und es demzufolge zu einer Undichtigkeit zwischen dem Kolben und dem durch diesen hindurchgeführten Antriebsseil kommt.

Der Erfindung liegt daher die Aufgabe zugrunde, bei einer Straffeinrichtung mit den eingangs genannten Merkmalen die Abdichtung zwischen dem Kolben und dem hindurchgeführten Antriebsseil zu verbessern.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht im einzelnen hierzu eine gattungsgemäße Straffvorrichtung vor, bei welcher der kolben (14) in der Form einer Olive mit einem in Längsrichtung des Rohres (10) größeren Radius als dem in Querrichtung des Rohres (10) wirksamen Radius ausgebildet ist und bei welcher die Presshülse mit einem das Antriebsseil umschließenden rohrförmigen Abschnitt und einem daran anschließenden scheibenartigen Ansatz ausgebildet ist, wobei sich der rohrförmige Abschnitt der Presshülse in den Kanal des Kolbens erstreck und der scheibenartige Ansatz gegen die Stirnseite des Kolbens anliegt. Mit der Erfindung ist der Vorteil verbunden, dass aufgrund der olivenförmigen Ausgestaltung des Kolbens die außenliegenden Dichtflächen gegen das Rohr vergrößert sind, so dass beim Durchlauf des Kolbens durch ein gekrümmtes Rohr die Dichtflächen jeweils in Anlage an der Innenwandung des Rohres bleiben, so dass eine gute Abdichtung des Kolbens im Rohr in allen Bewegungszuständen gewährleistet ist. Gleichzeitig sorgt die an dem Kolben festgelegte Presshülse für die Abdichtung des für den Seildurchtritt durch den Kolben erforderlichen Kanals. Weiterhin ist mit der Erfindung der Vorteil verbunden, dass im Rahmen der erfindungsgemäßen Ausgestaltung der das Seil umschließende rohrförmige Abschnitt durch den Kolben festgelegt ist und sich bei entsprechender Zugbelastung nicht aufweiten kann. Der auf der äußeren Stirnseite des Kolbens aufliegende scheibenartige Fortsatz sorgt für eine ausreichende Abdichtung des Seildurchtritts durch den Kolben und gewährleistet gleichzeitig eine ausreichende Kraftübertragungsfläche vom Kolben auf das Antriebsseil.

Das Ende des rohrförmigen Abschnitts der Presshülse liegt vorzugsweise nicht auf einem im Kanal des Kolbens ausgebildeten Absatz auf, damit im Rahmen einer entsprechenden Beanspruchung des Kolbens eine axiale Verkürzung und damit einhergehend eine radiale Aufweitung des Kolbens ermöglicht ist, um die Abdichtung zu verbessern. Im Rahmen einer entsprechenden Beanspruchung des Kolbens kann aber nach einem Ausführungsbeispiel der Erfindung vorgesehen sein, dass sich der rohrförmige Abschnitt der Presshülse stirnseitig auf dem im Kanal des Kolbens ausgebildeten Absatz abstützt, um bei der Verformung des Kolbens als zusätzliche Stützfläche zu wirken und somit die Verformung des Kolbens zu begrenzen.

Soweit weiterhin auch einerseits für eine ausreichende Abdichtung des Kolbens gegen die Rohrwandung des Rohres Sorge zu tragen und andererseits ein Verklemmen des Kolbens im Rohr bei seiner Bewegung zu vermeiden ist, ist nach einem Ausführungsbeispiel der Erfindung vorgesehen, dass der Kolben in seiner Längsrichtung einen größeren Radius als in seiner Querrichtung aufweist und in seinem an dem Rohr anliegenden Bereich mit dem kleineren Radius eine umlaufende Nut aufweist, deren äußere umlaufende Randbereiche wulstartig nach außen vorstehend ausgeformt sind und zwei beabstandete Dichtwülste mit zugeordneten Dichtflächen zum Rohr ausbilden. Die aufgrund der Formgebung des Kolbens, der in seiner Längsrichtung einen größeren Radius als in seiner Querrichtung aufweist, ohnehin gestreckte Anlagefläche ist bei diesem Ausführungsbeispiel durch die angeordnete Nut nochmals unterteilt, so dass zwei beabstandete Dichtwülste mit entsprechenden Anlageflächen ausgebildet sind. Insbesondere beim Durchlauf des Kolbens durch einen gekrümmten Rohrabschnitt befindet sich eine Dichtwulst mit zugeordneten Anlageflächen immer in Anlage an der zugeordneten Rohrwandung. Hierzu ist es bei einer in der EP 0 803 399 B1 beschriebenen Straffvorrichtung bereits bekannt, an dem Kolben diesen entsprechend gegen das Rohr abdichtende Dichtungen vorzusehen.

Nach einem Ausführungsbeispiel der Erfindung ist vorgesehen, dass der an die in Bewegungsrichtung des Kolbens vordere Dichtwulst anschließende Bereich des Kolbens in Richtung der vorsitzenden Presshülse kegelstumpfförmig ausgebildet ist, wobei weiterführend vorgesehen sein kann, dass der kegelstumpfförmige Bereich des Kolbens derart ausgebildet ist, dass er an seiner Stirnseite eine vergrößerte Auflagefläche für den scheibenartigen Ansatz der Presshülse ausbildet. Hiermit ist Auflagefläche für die Presshülse vergrößert und somit die Kraftübertragung verbessert.

Nach alternativen Ausführungsbeispielen der Erfindung kann der an die in Bewegungsrichtung des Kolbens hintere Dichtwulst anschließende Bereich des Kolbens ebenfalls in einer symmetrischen Ausbildung zu dem vorderen Bereich kegelstumpfförmig oder aber in Abwandlung davon auch zylindrisch ausgebildet sein.

Nach einem Ausführungsbeispiel der Erfindung ist vorgesehen, dass auf der der Presshülse abgewandten Seite des Kolbens ein stirnseitig gegen den Kolben anliegendes Führungsteil angeordnet und auf das Antriebsseil aufgefädelt ist. Soweit bei einem durch einen gebogenen Rohrabschnitt verlaufenden Antriebsseil das Antriebsseil immer die gerade Verbindung zwischen seinem Eintritt in das Rohr und dem durch das Rohr laufenden Kolben herstellen will, führt dies dazu, dass das Antriebsseil schief in den Kolben einläuft, gegebenenfalls den Kolben verkantet und die Dichtung des Kolbens gegen das Rohr sowie gegen das Antriebsseil verschlechtert. Insoweit ist mit dem zusätzlich angeordneten Führungsteil der Vorteil verbunden, dass das Antriebsseil über einen größeren Abschnitt seiner Streckung von dem Kolben weg mittig im Rohr geführt ist, so dass eine Verkantung des Kolbens im Rohr vermieden ist.

Nach einem ersten Ausführungsbeispiel der Erfindung kann vorgesehen sein, dass das Führungsteil als Kugel ausgebildet ist.

Alternativ kann vorgesehen sein, dass das Führungsteil als zylindrischer Führungskolben ausgebildet ist und auf seiner Anlagefläche zum Kolben eine Kalotte zur formschlüssigen Anlage der Kolbenfläche aufweist. Hierzu kann im einzelnen vorgesehen sein, dass der zylindrische Führungskolben topfförmig und entgegen der Bewegungsrichtung des Kolbens offen ausgebildet ist, wobei vorgesehen sein kann, dass die äußeren Randbereiche des Hohlraumes des topfförmigen Führungskolbens eine nach innen geneigte Fase aufweisen. Mit dieser Maßnahme wird ein Verkanten des Führungsteils im Rohr verhindert.

Hierbei kann das Führungsteil entweder aus einem Metall oder aber auch aus einem geeigneten Kunststoff bestehen, da das Führungsteil keine starke Beanspruchung auszuhalten hat.

In der Zeichnung sind Ausführungsbeispiele der Erfindung wiedergegeben, welche nachstehend beschrieben sind. Es zeigen:
- Fig. 1: ein Strafferrohr in einer schematischen Perspektivansicht,
- Fig. 2: einen Kolben in einer perspektivischen Darstellung,
- Fig. 3: eine Presshülse in einer perspektivischen Einzeldarstellung,
- Fig. 4: den Kolben gemäß Figur 2 in einer anderen Perspektivansicht,
- Fig. 5: den mit der Presshülse gemäß Figur 3 montierten Kolben gemäß Figur 2 bzw. 4 in einer Perspektivdarstellung,
- Fig. 6: eine andere Ausführungsform des Kolbens in einer Darstellung gemäß Figur 5,
- Fig. 7: eine weitere Ausführungsform des Kolbens in einer Darstellung gemäß Figur 5,
- Fig. 8: eine weitere Ausführungsform des Kolbens in einer Darstellung gemäß Figur 5,
- Fig. 9: einen Kolben mit einem kugelförmigen Führungsteil,
- Fig. 10: den Gegenstand der Figur 9 mit einem anders ausgeführten Führungsteil.

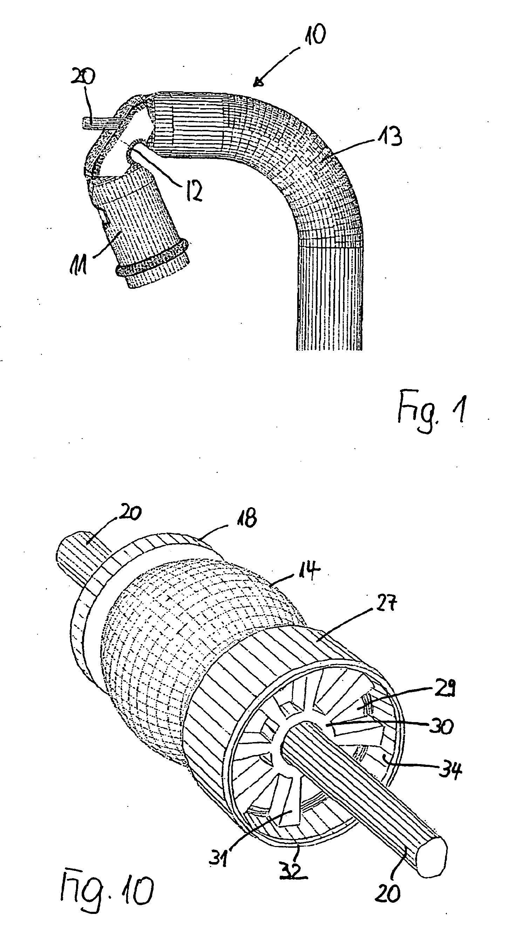

Das in Figur 1 dargestellte Strafferrohr 10 zur Aufnahme und Führung eines Kolbens als Gegenstand der Erfindung hat an einem Ende eine Gasgeneratoraufnahme 11, an die das eigentliche Rohr über eine Knickstelle 12 anschließt. Im Bereich der Knickstelle 12 ist ein Antriebsseil 20 in das Strafferrohr eingeführt. Das Strafferrohr 10 hat eine Rohrbiegung 13, die von dem nachstehend noch zu beschreibenden Kolben durchschritten werden muss.

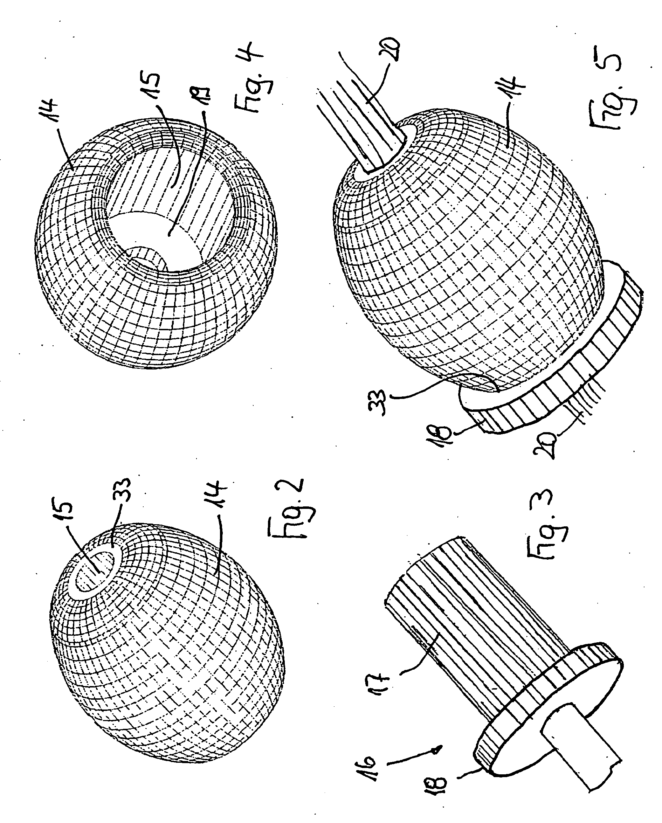

Wie sich zunächst aus Figur 2 ergibt, hat der Kolben 14 eine insgesamt olivenförmige Gestalt mit einem in der Längsrichtung des Kolbens größeren Radius als in Querrichtung des Kolbens, wobei in der Längsrichtung ein Kanal 15 in dem Kolben angeordnet ist.

Soweit das Antriebsseil 20 an den Kolben 14 anzuschließen ist, ist in Figur 3 eine entsprechende Presshülse 16 dargestellt, die einen rohrförmigen Abschnitt 17 und einen an dessen einem Ende befindlichen scheibenartigen Ansatz 18 aufweist. Der rohrförmige Abschnitt 17 ist dabei so ausgebildet, dass er das Antriebsseil 20 umschließt und festlegt.

Wie sich aus Figur 4 ergibt, ist der Kanal 15 in dem Kolben 14 derart ausgebildet, dass die Presshülse 16 mit dem rohrförmigen Abschnitt 17 in den Kanal 15 einsteckbar ist. Hierbei sind die Abmessungen des Kanals 15 und der Presshülse 16 derart aufeinander abgestimmt, dass das stirnseitige Ende des rohrförmigen Abschnitts 17 auf einem in dem Kanal 15 des Kolbens 14 gebildeten Absatz 19 noch nicht aufliegt; damit ist es dem olivenförmigen Kolben 14 bei entsprechender Beanspruchung ermöglicht, sich axial zu verkürzen und damit auch radial aufzuweiten. Während der Strafferbewegung und aufgrund der solchermaßen ermöglichten axialen Verkürzung des Kolbens 14 kann das stirnseitige Ende des rohrförmigen Abschnitts 17 jedoch in Anlage an dem Absatz 19 kommen, um als zusätzliche Stützfläche zu wirken und die Verformung des Kolbens begrenzen.

Weiterhin liegt in dem zusammenmontierten Zustand, wie er in Figur 5 dargestellt ist, der scheibenartige Ansatz 18 außen gegen die insoweit abgeflachte Stirnfläche 33 des Kolbens 14 an. Mit der Montage gemäß Figur 5 ist einerseits eine gute Kraftübertragung von dem durch die freigesetzten Gase längs des Strafferrohres 10 getriebenen Kolben 14 auf das Antriebsseil 20 gewährleistet, wobei gleichzeitig der Seildurchtritt durch den Kolben 14 entsprechend abgedichtet ist.

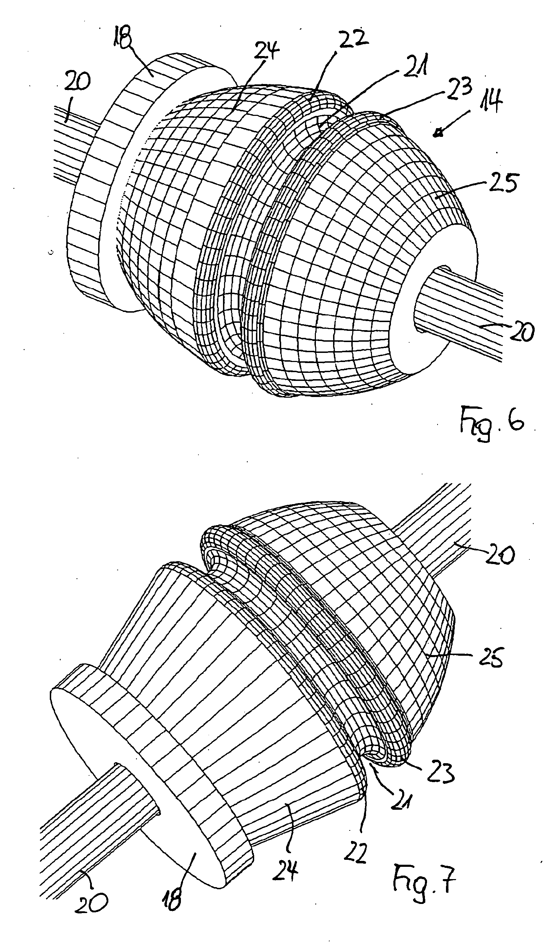

Bei dem in Figur 6 dargestellten Ausführungsbeispiel ist der Kolben in seinem an dem Rohr anliegenden Bereich mit einer umlaufenden Nut 21 versehen, deren äußere umlaufende Randbereiche wulstartig nach außen vorstehend ausgeformt sind, so dass zwei über die Breite der Nut 21 voneinander beabstandete Dichtwülste 22, 23 mit entsprechend angeordneten Dichtflächen ausgebildet sind. Hierbei ist mit 22 die in der Bewegungsrichtung des Kolbens 14 vordere Dichtwulst bezeichnet und mit 23 die hintere Dichtwulst. Entsprechend ergibt sich ein vorderer, zum scheibenartigen Ansatz 18 der Presshülse 16 führender Abschnitt 24 des Kolbens 14 sowie ein mit 25 bezeichneter hinterer Abschnitt. Bei dem in Figur 6 dargestellten Ausführungsbeispiel ist die olivenförmige Gestalt des Kolbens 14 beibehalten.

Bei dem in Figur 7 dargestellten Ausführungsbeispiel ist der vordere Abschnitt 24 des Kolbens 14 nun kegelstumpfförmig ausgebildet, wodurch sich an seiner vorderen Stirnseite eine größere Stirnfläche 33 zur Anlage des scheibenartigen Ansatzes 18 der Presshülse 16 ergibt.

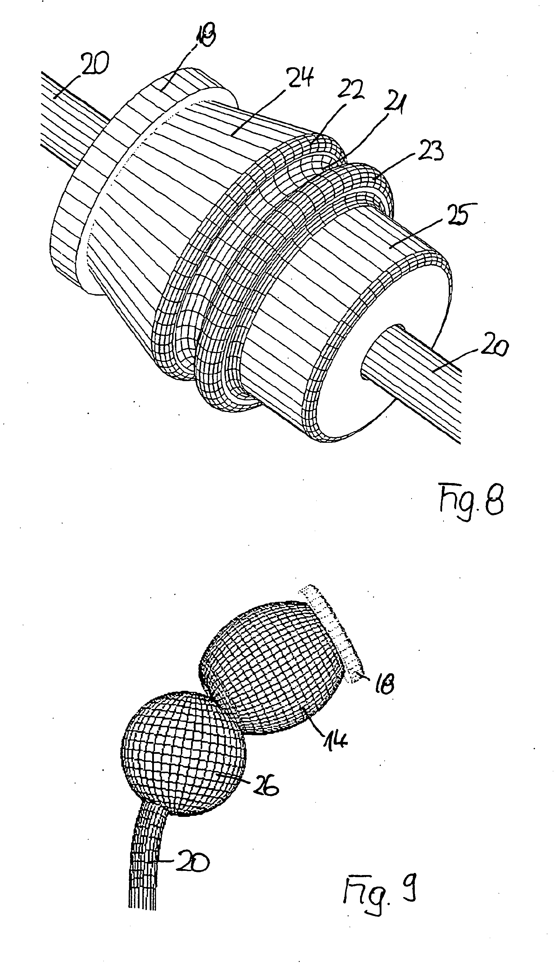

Bei dem in Figur 8 dargestellten Ausführungsbeispiel ist zusätzlich zu der kegelstumpfförmigen Ausbildung des vorderen Abschnitts 24 des Kolbens 14 der hintere Abschnitt 25 im wesentlichen zylinderförmig ausgeführt, um eine größere Andruckfläche für das hier auftreffende Gas zu schaffen.

Um eine bessere Führung des Antriebsseils 20 in dem Strafferrohr 10 insbesondere beim Durchlauf des Kolbens 14 durch die Rohrbiegung 13 auch noch außerhalb des Kolbens zu gewährleisten, ist bei dem in Figur 9 dargestellten Ausführungsbeispiel ein zusätzliches Führungsteil 26 in Form einer auf das Antriebsseil aufgefädelten Kugel vorgesehen, wobei die Kugel 26 gegenüber dem Kolben 14 beweglich ist. Da sich die Kugel 26 mit ihren Außenflächen ebenfalls gegen die Innenwandung des Strafferrohres 10 abstützt, wird das Antriebsseil 20 über einen längeren Weg in der Mitte des Strafferrohres 10 gehalten und geführt. Damit ist ein Verkanten des Seileintritts in den Kolben 14 vermieden.

Bei dem in Figur 10 dargestellten Ausführungsbeispiel ist das Führungsteil als topfförmige zylinderförmiger Führungskolben 27 ausgebildet mit einem Hohlraum 29, in dessen Innerem der Führungskolben 27 einen Durchführungsflansch 30 für das Antriebsseil 20 mit davon ausgehenden und an den äußeren Rand des topfförmigen Führungskolbens 27 angeschlossenen Speichen 31 ausgebildet sind. Wie nicht weiter dargestellt, kann der Führungskolben 27 in seiner Anlagefläche gegen den Kolben 14 eine Kalotte zur formschlüssigen Aufnahme der zugeordneten Kolbenfläche 14 aufweisen. Zur besseren Montage des Gurtstraffers kann der den Hohlraum 29 umschließende äußere Rand 34 des Führungskolbens 27 mit einer nach innen gerichteten Fase 32 versehen sein, da hierdurch das Einführen des Kolbens in das Rohr erleichtert wird.

## Patentansprüche

1. Straffeinrichtung für ein Sicherheitsgurtsystem in Kraftfahrzeugen mit einer aus einem wenigstens einen mit einem Krümmungsradius gebogenen Rohrabschnitt (13) aufweisenden Rohr (10) und aus einem darin beweglich geführten Kolben (14) bestehenden Antriebsvorrichtung, wobei der Kolben (14) über ein Antriebsseil (20) mit dem die Straffbewegung ausführenden Teil des Sicherheitsgurtsystems verbunden und mittels eines pyrotechnischen Antriebes in einer Längsbewegung durch das Rohr (10) bewegbar ist, und wobei der Kolben (14) mit einem Kanal (15) zur Durchführung des in einer auf der in Bewegungsrichtung des Kolbens (14) weisenden Seite des Kolbens (14) gegen den Kolben (14) abgestützten Presshülse (16) gehaltenen Antriebsseils (20) versehen ist, **dadurch gekennzeichnet, dass** der Kolben (14) in der Form einer Olive mit einem in Längsrichtung des Rohres (10) größeren Radius als dem in Querrichtung des Rohres (10) wirksamen Radius ausgebildet ist, und dass die Presshülse (16) mit einem das Antriebsseil (20) umschließenden rohrförmigen Abschnitt (17) und einem daran anschließenden scheibenartigen Ansatz (18) ausgebildet ist, wobei sich der rohrförmige Abschnitt (17) der Presshülse (16) in den Kanal (15) des Kolbens (14) erstreckt und der scheibenartige Ansatz (18) gegen die Stirnseite (33) des Kolbens (14) anliegt.

2. Straffeinrichtung nach Anspruch 1, **dadurch gekennzeichnet, dass** sich der rohrförmige Abschnitt (17) der Presshülse (16) bei Beanspruchung des Kolbens (14) stirnseitig auf einem im Kanal (15) des Kolbens (14) ausgebildeten Absatz (19) abstützt.

3. Straffeinrichtung nach Anspruch 1 oder 2, **dadurch gekennzeichnet, dass** der Kolben (14) in seiner Längsrichtung einen größeren Radius als in seiner Querrichtung aufweist und in seinem an dem Rohr (10) anliegenden Bereich mit dem kleineren Radius eine umlaufende Nut (21) aufweist, deren äußere umlaufende Randbereiche wulstartig nach außen vorstehend ausgeformt sind und zwei beabstandete Dichtwülste (22, 23) mit zugeordneten Dichtflächen zum Rohr (10) ausbilden.

4. Straffeinrichtung nach Anspruch 3, **dadurch gekennzeichnet, dass** der an die in Bewegungsrichtung des Kolbens (14) vordere Dichtwulst (22) anschließende Bereich (24) des Kolbens (14) in Richtung der vorsitzenden Presshülse (16) kegelstumpfförmig ausgebildet ist.

5. Straffeinrichtung nach Anspruch 4, **dadurch gekennzeichnet, dass** der kegelstumpfförmige Bereich (22) des Kolbens (14) derart ausgebildet ist, dass er an seiner Stirnseite (33) eine vergrößerte Auflagefläche für den scheibenartigen Ansatz (18) der Presshülse (16) bildet.

6. Straffeinrichtung nach einem der Ansprüche 3 bis 5, **dadurch gekennzeichnet, dass** der an die in Bewegungsrichtung des Kolbens (14) hintere Dichtwulst (23) anschließende Bereich (25) des Kolbens (14) kegelstumpfförmig ausgebildet ist.

7. Straffeinrichtung nach einem der Ansprüche 3 bis 5, **dadurch gekennzeichnet, dass** der an die in Bewegungsrichtung des Kolbens (14) hintere Dichtwulst (23) anschließende Bereich (25) des Kolbens (14) zylindrisch ausgebildet ist.

8. Straffeinrichtung nach einem der Ansprüche 1 bis 7, **dadurch gekennzeichnet, dass** auf der der Presshülse (16) abgewandten Seite des Kolbens (14) ein stirnseitig gegen den Kolben (14) anliegendes Führungsteil (26, 27) angeordnet und auf das Antriebsseil (20) aufgefädelt ist.

9. Straffeinrichtung nach Anspruch 8, **dadurch gekennzeichnet, dass** das Führungsteil als Kugel (26) ausgebildet ist.

10. Straffeinrichtung nach Anspruch 8, **dadurch gekennzeichnet, dass** das Führungsteil als zylindrischer Führungskolben (27) ausgebildet ist und auf seiner Anlagefläche zum Kolben (14) eine Kalotte zur formschlüssigen Anlage der Kolbenfläche aufweist.

11. Straffeinrichtung nach Anspruch 10, **dadurch gekennzeichnet, dass** der zylindrische Führungskolben (27) topfförmig und entgegen der Bewegungsrichtung des Kolbens (14) offen ausgebildet ist.

12. Straffeinrichtung nach Anspruch 11, **dadurch gekennzeichnet, dass** die äußeren Randbereiche des Hohlraumes des topfförmigen Führungskolbens (27) eine nach innen geneigte Fase (32) aufweisen.

13. Straffeinrichtung nach einem der Ansprüche 8 bis 12, **dadurch gekennzeichnet, dass** das Führungsteil (26, 27) aus einem Metall besteht.

14. Straffeinrichtung nach einem der Ansprüche 8 bis 12, **dadurch gekennzeichnet, dass** das Führungsteil (26, 27) aus einem Kunststoff besteht.

## Claims

1. A tensioning device for a seatbelt system in motor vehicles with a driving arrangement that comprises a tube (10) having at least one tube section (13) bent with a radius of curvature, and a piston (14) guided movably in said tube, whereby the piston (14) is connected via a driving cable (20) to the part of the seatbelt system which carries out the tensioning movement, and is movable in a longitudinal movement through the tube (10) by means of a pyrotechnic drive, and whereby the piston (14) is provided with a channel (15) for passing through the driving cable (20) that is held in a compression sleeve (16) fixed on the side of the piston (14) that points in the direction of movement of the piston (14), **characterized in that** the piston (14) is configured in the form of an olive with a larger radius in the longitudinal direction of the tube (10) than the effective radius in the transverse direction of the tube (10) and that the compression sleeve (16) is configured with a tube-shaped section (17) enclosing the driving cable (20) and a disk-like projecting piece (18) adjacent to it, whereby the tube-shaped section (17) of the compression sleeve (16) extends into the channel (15) of the piston (14) and the disk-like projecting piece (18) abuts against the front side (33) of the piston (14).

2. The tensioning device according to claim 1, **characterized in that** the tube-shaped section (17) of the compression sleeve (16) abuts against a projecting piece (19) configured in the channel (15) of the piston (14) with its front side when the piston (14) is loaded.

3. A tensioning device according to claim 1 or 2, **characterized in that** the piston (14) has a larger radius in the longitudinal direction than in its transverse direction and features in its area with the smaller radius adjacent to the tube (10) a circumferential groove (21) whose exterior circumferential boundaries are formed to protrude outward, and form two spaced sealing beads (22, 23) with associated sealing surfaces.

4. The tensioning device according to claim 3, **characterized in that** the area (24) of the piston (14) adjacent to the front sealing bead (22) in the direction of movement of the piston (14) is configured as a truncated cone in the direction of the forward compression sleeve (16).

5. The tensioning device according to claim 4, **characterized in that** the truncated cone area (22) of the piston (14) is configured such that it forms an enlarged contact surface for the disk-like projecting piece (18) of the compression sleeve (16) at its front end (33).

6. A tensioning device according to any one of claims 3 to 5, **characterized in that** the area (25) of the piston (14) adjacent to the rear sealing bead (23) in the direction of movement of the piston (14) is configured as a truncated cone.

7. A tensioning device according to any one of claims 3 to 5, **characterized in that** the area (25) of the piston (14) adjacent to the rear sealing bead (23) in the direction of the piston (14) is configured as a cylinder.

8. A tensioning device according to any one of claims 1 to 7, **characterized in that** on the side of the piston (14) facing away from the compression sleeve (16), a guiding part (26, 27) abutting against the piston (14) with its front side is arranged and mounted on the driving cable (20).

9. The tensioning device according to claim 8, **characterized in that** the guiding part is configured as a sphere (26).

10. The tensioning device according to claim 8, **characterized in that** the guiding part is configured as a cylindrical guide piston (27) and on its contact surface facing the piston (14) it has a cap for positive-abutment with the piston surface.

11. The tensioning device according to claim 10, **characterized in that** the cylindrical guide piston (27) is pot-shaped and open on the side opposite the direction of movement of the piston (14).

12. The tensioning device according to claim 11, **characterized in that** the external borders of the cavity of the pot-shaped guide piston (27) have an inward bevel (32).

13. A tensioning device according to any one of the claims 8 to 12, **characterized in that** the guiding part (26, 27) is made of metal.

14. A tensioning device according to any one of the claims 8 to 12, **characterized in that** the guiding part (26, 27) is made of a plastic material.

## Revendications

1. Tendeur de ceinture pour un système de ceinture de sécurité dans des véhicules automobiles, comportant un dispositif d'actionnement formé par un tube (10), muni d'au moins une partie de tube courbe (13) avec un rayon de courbure, et par un piston (14) mobile guidé dans le tube, ledit piston (14) étant relié par un câble d'actionnement (20) à la partie, effectuant le mouvement de tension, du système de ceinture de sécurité, et pouvant être déplacé dans un mouvement longitudinal à travers le tube (10) au moyen d'un système d'actionnement pyrotechnique, et ledit piston (14) étant muni d'un conduit (15) à travers lequel passe le câble d'actionnement (20), maintenu dans un manchon de pression (16) en appui contre le piston (14) sur le côté du piston (14) dirigé dans le sens de déplacement du piston (14), **caractérisé en ce que** le piston (14) est réalisé sous la forme d'une olive avec un rayon dans le sens longitudinal du tube (10) supérieur au rayon actif dans le sens transversal du tube (10), et **en ce que** le manchon de pression (16) est réalisé avec une partie tubulaire (17), entourant le câble d'actionnement (20), et une saillie (18) en forme de disque, prolongeant ladite partie tubulaire, ladite partie tubulaire (17) du manchon de pression (16) s'étendant dans le conduit (15) du piston (14) et la saillie (18) en forme de disque prenant appui contre la face frontale (33) du piston (14).

2. Tendeur de ceinture selon la revendication 1, **caractérisé en ce que** la partie tubulaire (17) du manchon de pression (16), en cas de sollicitation du piston (14), prend appui du côté frontal sur un décrochement (19) réalisé dans le conduit (15) du piston (14).

3. Tendeur de ceinture selon la revendication 1 ou 2, **caractérisé en ce que** le piston (14) possède dans sa direction longitudinale un rayon supérieur à celui dans la direction transversale, et dans sa zone avec le plus petit rayon, en appui contre le tube (10), comporte une rainure (21) périphérique, dont les zones de bord périphériques extérieures sont formées en saillie vers l'extérieur à la manière d'un bourrelet et forment deux bourrelets d'étanchéité (22, 23), à distance l'un de l'autre, avec des surfaces d'étanchéité associées dirigées vers le tube (10).

4. Tendeur de ceinture selon la revendication 3, **caractérisé en ce que** la zone (24) du piston (14), adjacente au bourrelet d'étanchéité avant (22) par référence au sens de déplacement du piston (14), est réalisée avec une forme tronconique dirigée vers le manchon de pression (16) situé en amont.

5. Tendeur de ceinture selon la revendication 4, **caractérisé en ce que** la zone tronconique (22) du piston (14) est réalisée de telle sorte qu'elle forme sur sa face frontale (33) une surface d'appui agrandie pour la saillie (18) en forme de disque du manchon de pression (16).

6. Tendeur de ceinture selon l'une des revendications 3 à 5, **caractérisé en ce que** la zone (25) du piston (14), adjacente au bourrelet d'étanchéité arrière (23) par référence au sens de déplacement du piston (14), est réalisée avec une forme tronconique.

7. Tendeur de ceinture selon l'une des revendications 3 à 5, **caractérisé en ce que** la zone (25) du piston (14), adjacente au bourrelet d'étanchéité arrière (23) par référence au sens de déplacement du piston (14), est réalisée avec une forme cylindrique.

8. Tendeur de ceinture selon l'une des revendications 1 à 7, **caractérisé en ce que** sur le côté du piston (14), détourné du manchon de pression (16), est disposé un élément de guidage (26, 27), en appui du côté frontal contre le piston (14), cet élément étant enfiché sur le câble d'actionnement (20).

9. Tendeur de ceinture selon la revendication 8, **caractérisé en ce que** l'élément de guidage est réalisé sous forme de sphère (26).

10. Tendeur de ceinture selon la revendication 8, **caractérisé en ce que** l'élément de guidage est réalisé sous forme de piston de guidage (27) cylindrique et, sur sa face d'appui contre le piston (14), comporte une calotte pour un appui par conjugaison de forme de la surface du piston.

11. Tendeur de ceinture selon la revendication 10, **caractérisé en ce que** le piston de guidage (27) cylindrique est réalisé en forme de godet et est ouvert dans le sens opposé au sens de déplacement du piston (14).

12. Tendeur de ceinture selon la revendication 11, **caractérisé en ce que** les zones de bord extérieures de la cavité du piston de guidage (27) en forme de godet comportent un chanfrein (32) incliné vers l'intérieur.

13. Tendeur de ceinture selon l'une des revendications 8 à 12, **caractérisé en ce que** l'élément de guidage (26, 27) est réalisé en métal.

14. Tendeur de ceinture selon l'une des revendications 8 à 12, **caractérisé en ce que** l'élément de guidage (26, 27) est réalisé dans une matière plastique.
